# EUROPÄISCHE PATENTSCHRIFT

(11) **EP 1 332 785 B1**
(45) Veröffentlichungstag und Bekanntmachung des Hinweises auf die Patenterteilung: **07.07.2004**
(21) Anmeldenummer: 03001698.4
(22) Anmeldetag: 27.01.2003
(51) Int. Cl.: B01D 53/26, B64D 11/02

(54) **Filtereinrichtung für ein Vakuumtoilettensystem**
Filter device for a vacuum toilet system
Dispositif de filtration pour un système de toilette à aspiration sous vide

(30) Priorität: 02.02.2002 DE 10204248
(43) Veröffentlichungstag der Anmeldung: 06.08.2003
(73) Patentinhaber: Airbus Deutschland GmbH, 21129 Hamburg (DE)
(72) Erfinder: Doss, Martin, 21614 Buxtehude (DE); Erdmann, Wolfgang, 21614 Buxtehude (DE); Ohlfest, Carsten, 25348 Glückstadt (DE)
(74) Vertreter: Hansmann, Dierk, Dipl.-Ing.

(56) Entgegenhaltungen:
- EP-A- 0 474 271
- US-B1- 6 206 943

## Beschreibung

Die Erfindung betrifft eine Filtereinrichtung für ein Vakuumtoilettensystem, wobei mindestens ein Filterelement zum Entfernen von Verunreinigungen aus einem Volumenstrom vorgesehen ist und das Filterelement in einem Filtergehäuse angeordnet ist, welches in Verbindung mit der Oberseite des Abwassertanks steht.

Luftfahrzeuge für den Passagiertransport werden üblicherweise mit einem Vakuumtoilettensystem ausgestattet, die den Differenzdruck von Außen- und Innendruck in der Kabine während des Fluges für die Absaugung des Fördergutes aus den Toiletten nutzen. Eine weitere Möglichkeit der Vakuumerzeugung ist mittels eines Vakuum-Generators vorgesehen, der zum Einsatz kommt, wenn das Luftfahrzeug am Boden steht oder sich in niedrigen Flughöhen befindet. Ein prinzipieller Aufbau eines derartigen Toilettensystems ist gekennzeichnet durch Aufgabestellen, beispielsweise Toiletten, die über eine Sammelleitung mit mindestens einem Abwassertank verbunden sind. Über den Abwassertank ist das Toilettensystem mit der Außenumgebung verbunden, d.h. der Luftstrom mit dem Fördergut wird in den Abwassertank geleitet, das Fördergut verbleibt im Abwassertank und der Luftstrom wird nach außen geführt. Um den Schmutzbereich des Toilettensystems von der Außenluft und von den für die Differenzdruckerzeugung erforderlichen Maschinenteile zu trennen, ist notwendigerweise ein Filtersystem vorgesehen.

Zur Zeit werden Filtersysteme gemäß US-B1-6206 943 eingesetzt, die als Volumen- bzw. Speicherfilter ausgelegt sind, eingebaut. Ein sogenannter "Waste Separator" ist üblicherweise zwischen Abwassertank und Außenleitung angeordnet. Der aus dem Abwassertank bzw. der Sammelleitung kommende Luftstrom wird im Separator gereinigt und nach außen geleitet. Noch im Luftstrom vorhandene Reste des Fördergutes werden herausgefiltert. In einem Gehäuse ist ein erstes Filterelement angeordnet. Dieses Filterelement separiert den Luftstrom von noch vorhandenen Verunreinigungen, vor allem von Flüssigkeitsresten. Über eine kleine Öffnung im unteren Gehäusebereich läuft die separierte Flüssigkeit zurück in den Abwassertank. Da das Fördergut auch Reste von Toilettenpapier, Taschentüchern, Zeitungspapier oder ähnlichen festen Stoffen enthalten kann, können diese die Ablauföffnung verstopfen oder werden in das Filterelement gesogen.

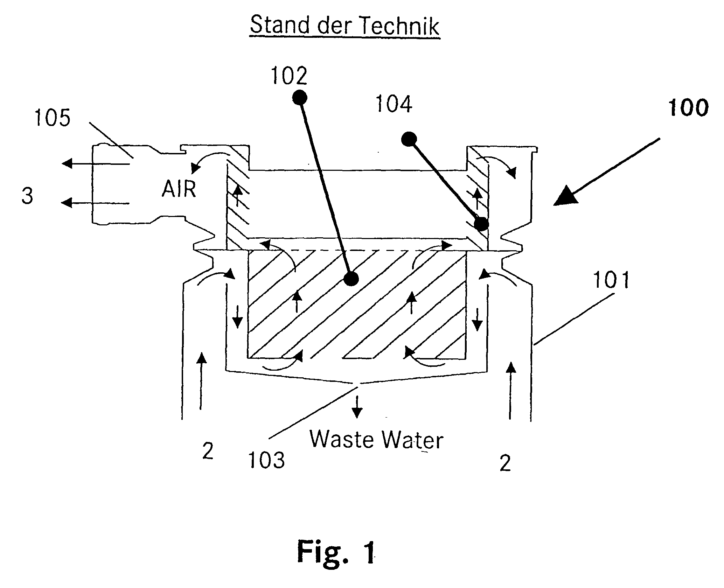

Eine Prinzipskizze eines Separators gemäß Flugzeug Airbus A340 ist in Fig. 1 der Zeichnung ersichtlich. Über ein erstes Filterelement ist ein zweites Filterelement - bestehend aus einem aufgewickelten Stahldrahtgeflecht - angeordnet. Die von unten nach oben durchströmende Luft wird weiter separiert. Das vorhandene Filtersystem weist den Nachteil auf, dass bei Sättigung kein Aufbau des Systemdifferenzdrucks mehr zugelassen wird. Da diese Filtersysteme während des Einsatzes nicht gereinigt werden können, verschlechtert sich die Absaugung kontinuierlich. Hierdurch kann es zu Verstopfungen in den Abwasserleitungen kommen, was letztendlich auch zum Ausfall des gesamten Toilettensystems führen kann. Auch können Rückstände durch die Filterstufen hindurchgelangen und somit während des Ansaugens die Außenhaut des Luftfahrzeuges oder die Mechanik des Vakuum-Generators mit Verunreinigungen kontaminieren.
Ein weiterer Nachteil ist, dass eine Reinigung des Filtersystems nur mit einem hohen Aufwand möglich ist. Der mindestens eine Abwassertank mit daran angeordnetem "Waste Seperator" ist üblicherweise in einem Flugzeug, beispielsweise in einer A340, im Heckbereich hinter dem hinteren Frachtraum angeordnet. Die zu reinigenden bzw. auszutauschenden Filterelemente sind schwer zugänglich und damit ist im Wartungsfall eine zeit- und kostenaufwendige Montage dieser Teile durchzuführen.
Weiterhin ist nach der EP-A-0474 271 ein externer Separator für ein Toilettensystem bekannt geworden, der ein als Volumenfilter ausgebildetes Filtersystem mit den bereits genannten Nachteilen aufweist.
Der vorliegenden Erfindung liegt somit die Aufgabe zugrunde, eine Filtereinrichtung für ein Vakuumtoilettensystem, insbesondere zur Verwendung in einem Verkehrsflugzeug, derart zu verbessern, das ein Zusetzen der Filterelemente und damit eine Beeinträchtigung der Funktionsfähigkeit des Toilettensystems vermieden wird, die Lebensdauer gegenüber einem Volumenfilter erhöht wird sowie der Aufwand für Reinigungs- und Wartungsvorgänge verringert wird.
Diese Aufgabe wird bei einer gattungsgemäßen Filtereinrichtung durch die im Patentanspruch 1 genannten Maßnahmen gelöst.
Dabei ist insbesondere vorteilhaft, dass ein Verstopfen der Filtereinrichtung wirkungsvoll vermieden werden kann und damit die Funktionsfähigkeit des Vakuumtoilettensystems durch dieses Bauteil nicht beeinträchtigt wird. Eine Verschlechterung der Absaugung und letztlich ein Ausfall des gesamten Toilettensystems aufgrund eines zugesetzten Filters wird wirkungsvoll verhindert. Der Aufwand für notwendige Wartungsmaßnahmen sowie für vorbeugende Wartungsinspektionen kann erheblich reduziert werden.
Mit der erfindungsgemäßen Lösung wird weiterhin vermieden, dass Verunreinigungen während des Ansaugens an die Flugzeugaußenhaut oder an Bauteile des Vakuum-Generators gelangen können.
Weiterbildungen und vorteilhafte Ausgestaltungen sind in den Ansprüchen 2 bis 8 angegeben. Weitere Vorteile ergeben sich aus der nachfolgenden Detailbeschreibung.

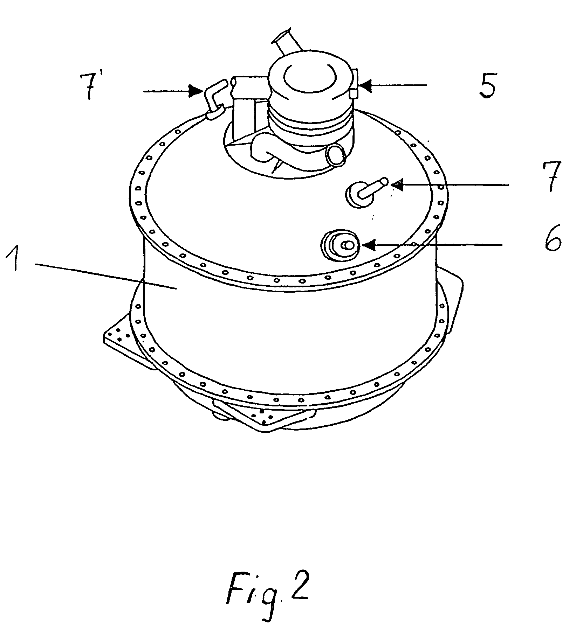

In der Zeichnung sind Ausführungsbeispiele der Erfindung dargestellt, die nachstehend anhand der Figuren 2 bis 8 näher beschrieben sind. In der Fig. 1 ist in einer Prinzipdarstellung der Stand der Technik dargestellt. In den Figuren sind gleiche Bauteile mit gleichen Bezugszeichen versehen.

Es zeigen:
- Fig. 1: eine Prinzipdarstellung eines bekannten Filtersystems für ein Flugzeugabwassersystem,
- Fig. 2: eine Perspektivdarstellung eines Abwassertanks eines Flugzeugabwassersystems,
- Fig. 3: einen Querschnitt durch den Abwassertank mit einer erfindungsgemäßen Filtereinrichtung in einer schematischen Darstellung,
- Fign. 4 und 5: Funktionsdarstellungen der erfindungsgemäßen Filtereinrichtung,
- Fig. 6: ein Querschnitt durch die erfindungsgemäße Filtereinrichtung,
- Fig. 7: die Filtereinrichtung gemäß Fig. 6 in einer Draufsicht und
- Fig. 8: die erfindungsgemäße Filtereinrichtung in einer zweiten Ausführungsform.

In der Figur 1 ist in einer Prinzipdarstellung ein "Waste-Separator" 100 gezeigt, wie er aus dem Stand der Technik bekannt ist. Wie bereits in der Würdigung des Standes der Technik ausgeführt, ist der Separator 100 im oberen Bereich eines Abwassertanks 1 eines Flugzeugtoilettensystems angeordnet. Der aus dem Abwassertank 1 kommende Volumenstrom 2, bestehend aus Luft und noch im Luftstrom vorhandene Reste des Fördergutes ("Waste water"), wird im Separator 100 gereinigt und die Luft wird nach außen geleitet. In einem Gehäuse 101 ist ein erstes Filterelement 102 - bestehend aus einem gekräuselten Perlonfaden - angeordnet. Das Filterelement 102 separiert den Luftstrom von noch vorhandenen Verunreinigungen, vor allem von Flüssigkeitsresten. Über eine kleine Ablauföffnung 103 im unteren Bereich des Gehäuses 101 läuft die separierte Flüssigkeit 4 zurück in den Abwassertank 1. Da das Fördergut auch Reste von Toilettenpapier, Taschentüchern, Zeitungspapier oder ähnlichen festen Stoffen enthalten kann, können diese die Ablauföffnung 103 verstopfen oder werden in das Filterelement 102 gesogen. Über dem ersten Filterelement 102 ist ein zweites Filterelement 104 - bestehend aus einem aufgewickelten Stahldrahtgeflecht - angeordnet. Die von unten nach oben durchströmende Luft wird weiter separiert und danach der gereinigte Volumenstrom 3 über eine Außenleitung 105 in die Außenumgebung abgegeben.

In Fig. 2 ist der Abwassertank 1 eines Vakuumtoilettensystems perspektivisch dargestellt. An der Oberseite des Tanks 1 ist unter anderem eine Filtereinrichtung 5 angeordnet. Der in Fig. 1 beschriebene "Waste Separator" 100 als Filtereinrichtung wird durch eine erfindungsgemäße Ausführung der Filtereinrichtung 5 ersetzt. Neben der Filtereinrichtung 5 sind im oberen Bereich des Abwassertanks 1 ein Füllstandssensor 6 sowie Tankspülanschlüsse 7, 7' angeordnet.

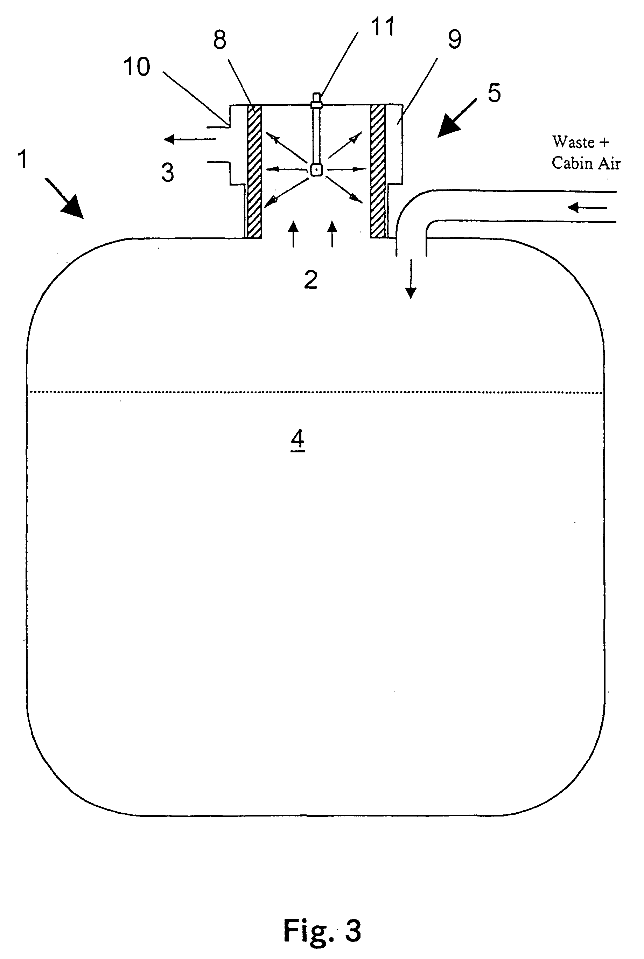

In Fig. 3 ist in einer Querschnittsdarstellung in schematischer Weise der Abwassertank 1 mit der Filtereinrichtung 5 gezeigt. Die Filtereinrichtung 5 ist auf der Oberseite des Tanks 1 angeordnet, wobei ein vorzugsweise zylindrisches Filterelement 8 in einem Filtergehäuse 9 vorgesehen ist, welches von dem Volumenstrom 2, bestehend aus Luft und noch im Luftstrom vorhandene Reste des Fördergutes ("Waste water"), von innen nach außen durchströmt wird. Das Filtergehäuse 9 ist über einen Auslass 10 mit einer Außenleitung verbunden, der gereinigte Volumenstrom 3 wird über den Auslass 10 an die Außenumgebung abgegeben.
Für eine Reinigung des Filterelements 8 ist bedarfsweise eine Reinigungseinheit 11 vorgesehen, die die Filteroberfläche mit Wasser spült.

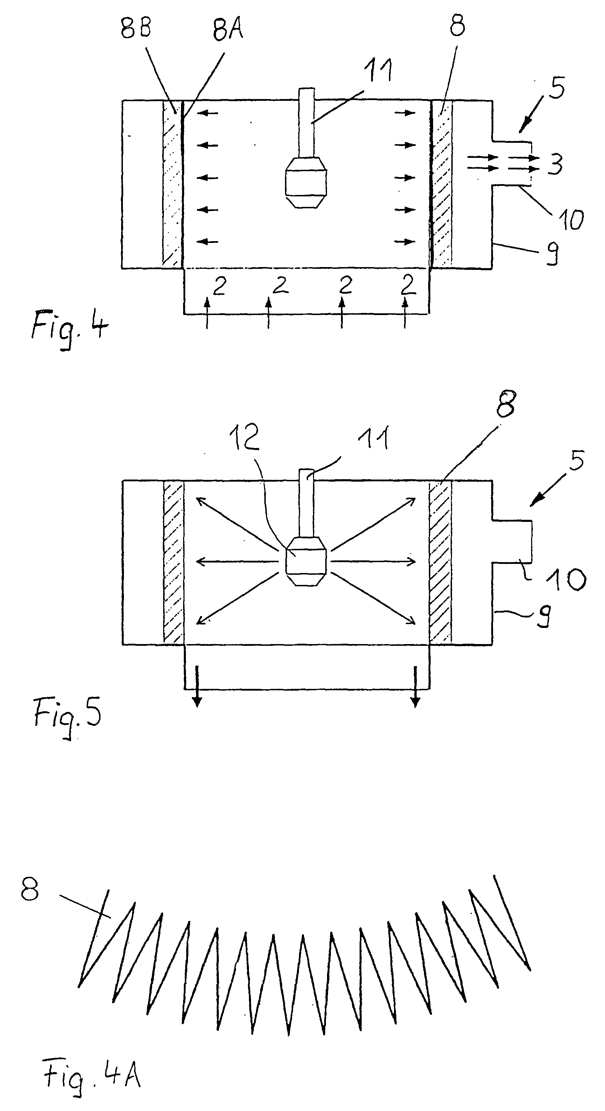

In den Figuren 4 und 5 ist die erfindungsgemäße Filtereinrichtung 5 in den zwei Funktionen "Betrieb des Vakuumtoilettensystems" und "Wartungsbetrieb" dargestellt. Fig. 4 zeigt die Durchströmung der Filtereinrichtung 5 während des Betreibens des Vakuumtoilettensystems. Das Filterelement 8 ist als Oberflächenfilter ausgebildet und wird als Filterpatrone in das Filtergehäuse 9 eingebaut. Das Filtermaterial ist in der Filterpatrone fächerartig gefaltet und bildet Rippen, wie aus Fig. 4A ersichtlich. Damit wird die nötige Größe der Durchströmfläche erreicht. Es kann auf eine Faltung des Filtermaterials verzichtet werden, wenn eine ausreichende Durchströmfläche bereits ohne eine fächerartige Faltung des Filtermaterials erreicht wird. Erfindungsgemäß wird als Filterelement 8 ein PTFE-Membranfilter eingesetzt, wobei hier die Schmutzpartikel an der Oberfläche des Filters abgeschieden werden. Durch Recken von PTFE entsteht eine mikroporöse PTFE-Membrane, die relativ dünn (beispielsweise ca. 50 µm) ausgebildet ist und nach dem Prinzip der Oberflächenfiltration arbeitet. Die PTFE-Membrane wird auf ein geeignetes Trägermaterial, beispielsweise Gewebe aus synthetischen Fasern wie Polyesterflies, aufgebracht. Das PTFE-Membran-Material ist beispielsweise auch unter dem Namen GORE-TEX bekannt. Durch die Antihafteigenschaften von PTFE (Polytetrafluoräthylen) wird die Filteroberfläche nur leicht verschmutzt, ein Zusetzen wie bei einem Volumenfilter kann nicht eintreten. Die Durchströmung des Filterelementes 8 erfolgt von innen nach außen, d.h. dass die PTFE-Membrane 8A in der Innenseite des Filterelementes 8 angeordnet ist und somit zuerst die PTFE-Membrane 8A und danach das Trägermatererial 8B durchströmt wird. Der ungereinigte Volumenstrom 2 wird nach der Durchströmung als gereinigter Volumenstrom 3 durch den Auslass 10 abgeführt. Aufgrund der Antihafteigenschaften des PTFE-Membranfilters 8A werden die separierten Verunreinigungen, vor allem die Flüssigkeitsreste aufgrund der Schwerkraft allein in den Abwassertank 1 ablaufen. Falls Schmutzpartikel haften bleiben kann gemäß Fig. 5 eine Reinigung des Filterelementes 8 durch Abspülen der Filteroberfläche erfolgen. Dafür ist die Reinigungseinheit 11 vorgesehen, die mittig des Filterelementes 8 angeordnet ist. Die Reinigungseinheit 11 wird mit Spülwasser gespeist und weist vorzugsweise eine rotierende Wasserdüse 12 auf, die bei Vorsehen eines bestimmten Wasserdruckes in Drehung gebracht wird. Damit ist sichergestellt, dass vollständig die Filteroberfläche gespült wird. Die Spülflüssigkeit zusammen mit den abgespülten Schmutzartikeln läuft in den Abwassertank 1 ab. Es ist möglich, dass das Spülen des Filters regelmäßig in vorgegebenen Intervallen erfolgt. Damit kann das Verschmutzen des Filters sehr zuverlässig verhindert werden und die Wartungsintervalle mit einem zeitaufwendigen Austauschen des Filterelementes 8 können erheblich vergrößert werden.

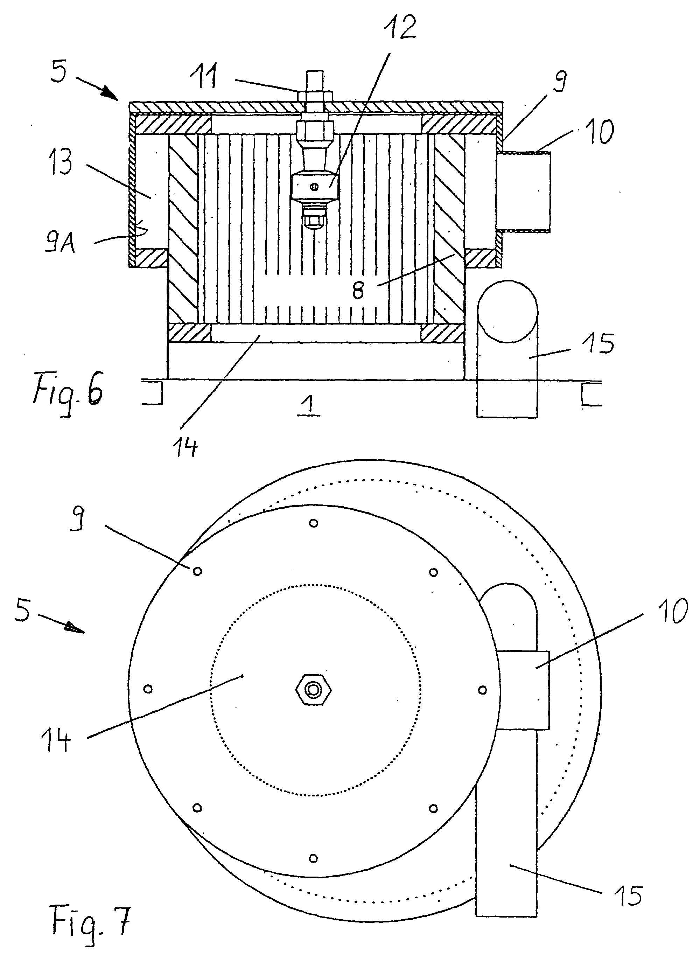

In den Figuren 6 und 7 ist die erfindungsgemäße Filtereinrichtung 5 in einer Querschnittsdarstellung sowie in einer Draufsicht gezeigt. Das Filtergehäuse 9 ist an der Oberseite des Abwassertanks 1 angeordnet. In die zylindrische Form des Filtergehäuses 9 ist das Filterelement 8 eingebracht, wobei ein Strömungskanal 13 zwischen Gehäusewandung 9A und Filterelement 8 verbleibt, um ein Abströmen des gereinigten Volumenstroms 3 zum seitlich angeordneten Auslass 10 zu ermöglichen. Ein Einströmen des zu reinigenden Volumenstromes 2 erfolgt über den Einlass 15. Das Filterelement 8 kann vorzugsweise mit Stabilisatoren gestützt oder in einen Stützkäfig (nicht gezeigt) eingebracht werden, um eine ausreichende Stabilität dieses Bauteils zu erreichen. Das Filtergehäuse 9 weist zum Abwassertank 1 hin eine ausreichend große Ablauföffnung 14 auf, um die separierten Verunreinigungen vom Filterelement 8 abzuleiten.

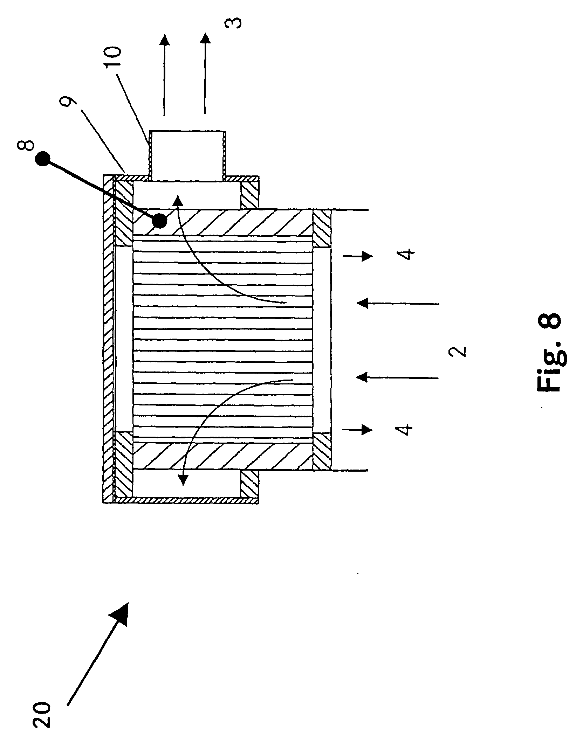

In der Fig. 8 ist eine zweite Ausführungsform 20 der erfindungsgemäßen Filtereinrichtung 5 gezeigt. Zur prinzipiellen Funktionsweise dieser Filtereinrichtung 5 wird auf die vorangegangene Beschreibung verwiesen, da die Bauweise dieser Ausführungsform der ersten Ausführungsform gleicht und lediglich die Reinigungseinheit 11 in dieser Ausführungsform nicht vorgesehen ist. Mit dem Einsatz eines PTFE-Membranfilters 8 ist auch ohne die Möglichkeit des Abspülen der Filteroberfläche eine Verbesserung der Filtereigenschaften gegenüber dem bisherigen Stand der Technik erreicht. Insbesondere für das Nachrüsten von Filtereinrichtungen in bereits vorhandene Vakuumtoilettensysteme ist diese Ausführungsform 20 einsetzbar, da der für die Reinigungseinheit 11 notwendige Wasseranschluss entfallen kann und somit ein einfacher Austausch der bisherigen Filtereinrichtungen mit der erfindungsgemäßen Filtereinrichtung 5 möglich ist. Da aufgrund der guten Antihafteigenschaften der PTFE (Polytetrafluoräthylen)-Membran die Filteroberfläche während des Betriebes der Vakuumtoilette nur gering verschmutzt, kann ein Spülen der Filteroberfläche während Wartungsinspektionen durchgeführt werden und ein gesamter Austausch des Filterelementes 8 ist nur in größeren Intervallen notwendig.

### Bezugszeichenliste

- 100 -: Waste-Separator
- 101 -: Gehäuse
- 102 -: erstes Filterelement
- 103 -: Öffnung im Gehäuse 101
- 104 -: zweites Filterelement
- 105 -: Außenleitung

- 1 -: Abwassertank
- 2 -: ungereinigter Volumenstrom
- 3 -: gereinigter Volumenstrom
- 4 -: Abwasser (waste water)
- 5 -: Filtereinrichtung
- 6 -: Füllstandssensor
- 7, 7' -: Spülwasseranschlüsse
- 8 -: Filterelement
- 8A -: PTFE-Membran
- 8B -: Trägermaterial
- 9 -: Filtergehäuse
- 9A -: Gehäusewandung
- 10 -: Auslass
- 11 -: Reinigungseinheit
- 12 -: Wasserdüse
- 13 -: Strömungskanal
- 14 -: Ablauföffnung
- 15 -: Einlass

- 20 -: zweite Ausführungsform der Filtereinrichtung

## Patentansprüche

1. Filtereinrichtung (5) für ein Vakuumtoilettensystem, wobei mindestens ein Filterelement (8) zum Entfernen von Verunreinigungen aus einem Volumenstrom (2) vorgesehen ist und das Filterelement (8) in einem Filtergehäuse (9) angeordnet ist, welches in Verbindung mit der Oberseite eines Abwassertanks (1) steht, **dadurch gekennzeichnet, dass**
das Filterelement (8) als PTFE-Membranfilter ausgebildet ist, der in dem Filtergehäuse (9) angeordnet ist, zwischen dem Filterelement (8) und der Gehäusewandung (9A) ein Strömungskanal (13) gebildet ist, der in einen Auslass (10) zum Ableiten des gereinigten Volumenstromes (3) endet und auf der zuerst durchströmten Fläche des Filterelementes (8) die PTFE-Membran (8A) vorgesehen ist zum Abscheiden der separierten Verunreinigungen, wobei die Verunreinigungen (4) durch eine Ablauföffnung (14) in den Abwassertank (1) leitbar sind.

2. Filtereinrichtung nach Anspruch 1, **dadurch gekennzeichnet, dass** die PTFE-Membranschicht (8A) auf ein Trägermaterial (8B) aufgebracht ist.

3. Filtereinrichtung nach einem der Ansprüche 1 oder 2, **dadurch gekennzeichnet, dass** der PTFE-Membranfilter (8) zylindrisch geformt ist

4. Filtereinrichtung nach einem der Ansprüche 1 bis 3, **dadurch gekennzeichnet, dass** der PTFE-Membranfilter (8) fächerartig gefaltet ist zur Vergrößerung der Durchströmfläche.

5. Filtereinrichtung nach einem der Ansprüche 1 bis 4, **dadurch gekennzeichnet, dass** der PTFE-Membranfilter (8) durch Stabilisatoren oder durch einen Stützkäfig gehalten wird und diese Elemente eine Filterpatrone bilden.

6. Filtereinrichtung nach einem der Ansprüche 1 bis 5, **dadurch gekennzeichnet, dass** eine Reinigungseinheit (11) zum Reinigen der Filteroberfläche des PTFE-Membranfilters (8) vorgesehen ist.

7. Filtereinrichtung nach Anspruch 6, **dadurch gekennzeichnet, dass** die Reinigungseinheit (11) mittels Sprühdüsen zum Besprühen der Filteroberfläche mit Spülflüssigkeit realisiert ist und die Spülflüssigkeit mit den Verunreinigungen unter Schwerkraftwirklung durch die Ablauföffnung (14) in den Abwassertank (1) abläuft.

8. Filtereinrichtung nach einem der Ansprüche 6 oder 7, **dadurch gekennzeichnet, dass** die Reinigungseinheit (11) eine rotierende Wasserdüse (12) aufweist.

## Claims

1. A filter apparatus (5) for a vacuum toilet system, wherein at least one filter element (8) is provided for removing contaminants from a stream (2) and the filter element (8) is arranged in a filter housing (9), which is connected to the top of a waste water tank (1), **characterised in that** the filter element (8) takes the form of a PTFE membrane filter, which is arranged in the filter housing (9), a flow channel (13) is formed between the filter element (8) and the housing wall (9A), which channel ends in an outlet (10) for draining away the decontaminated stream (3) and the PTFE membrane (8A) is provided on the surface of the filter element (8) flowed through first for elimination of the separated contaminants, wherein the contaminants (4) may be conveyed through a discharge opening (14) into the waste water tank (1).

2. A filter apparatus according to claim 1, **characterised in that** the PTFE membrane layer (8A) is applied to a support material (8B).

3. A filter apparatus according to one of claims 1 or 2, **characterised in that** the PTFE membrane filter (8) is cylindrical in shape.

4. A filter apparatus according to one of claims 1 to 3, **characterised in that** the PTFE membrane filter (8) is folded in the manner of a fan to enlarge the flow area.

5. A filter apparatus according to one of claims 1 to 4, **characterised in that** the PTFE membrane filter (8) is held by stabilisers or by a supporting cage and these elements form a filter cartridge.

6. A filter apparatus according to one of claims 1 to 5, **characterised in that** a cleaning unit (11) is provided for cleaning the filter surface of the PTFE membrane filter (8).

7. A filter apparatus according to claim 6, **characterised in that** the cleaning unit (11) is provided by means of spray nozzles for spraying the filter surface with rinsing liquid and the rinsing liquid runs off with the contaminants under the effect of gravity through the discharge opening (14) into the waste water tank (1).

8. A filter apparatus according to one of claims 6 or 7, **characterised in that** the cleaning unit (11) comprises a revolving water nozzle (12).

## Revendications

1. Dispositif de filtration (5) pour un système de toilette à aspiration sous vide, au moins un élément de filtration (8) ayant été prévu pour extraire des pollutions d'un écoulement volumétrique (2) et l'élément de filtration (8) ayant été disposé dans un logement de filtre (9) raccordé à la face supérieure du réservoir d'eaux usées (1), **caractérisé en ce que** l'élément de filtration (8) se présente sous la forme d'un filtre à membrane PTFE disposé dans le logement de filtre (9), **en ce qu'**un canal d'écoulement (13) débouchant dans une sortie (10) de déviation de l'écoulement volumétrique (3) nettoyé a été constitué entre l'élément de filtration (8) et la paroi du logement (9A) et **en ce que** la membrane PTFE (8A) destinée à décanter les pollutions isolées a été prévue sur la surface de l'élément de filtration (8) irriguée en premier, les pollutions (4) pouvant être acheminées jusque dans le réservoir d'eaux usées par l'intermédiaire d'une ouverture d'écoulement (14).

2. Dispositif de filtration selon la revendication 1, **caractérisé en ce que** la couche de la membrane PTFE (8A) a été appliquée sur un matériau de support (8B).

3. Dispositif de filtration selon une des revendications 1 ou 2, **caractérisé en ce que** le filtre à membrane PTFE (8) est de forme cylindrique.

4. Dispositif de filtration selon une des revendications 1 à 3, **caractérisé en ce que** le filtre à membrane PTFE (8) a été plié en éventail pour agrandir la surface d'écoulement.

5. Dispositif de filtration selon une des revendications 1 à 4, **caractérisé en ce que** le filtre à membrane PTFE (8) est maintenu par des stabilisateurs ou une cage d'appui et **en ce que** ces éléments forment une cartouche de filtre.

6. Dispositif de filtration selon une des revendications 1 à 5, **caractérisé en ce qu'**une unité de nettoyage (11) a été prévue pour nettoyer la surface du filtre à membrane PTFE (8).

7. Dispositif de filtration selon la revendication 6, **caractérisé en ce que** l'unité de nettoyage (11) a été conçue à l'aide de gicleurs de pulvérisation destinés à pulvériser la surface du filtre avec du liquide de pulvérisation et **en ce que** le liquide de pulvérisation contenant les pollutions s'écoule sous l'effet de la pesanteur jusque dans le réservoir d'eaux usées (1), par l'intermédiaire de l'ouverture d'écoulement (14).

8. Dispositif de filtration selon une des revendications 6 ou 7, **caractérisé en ce que** l'unité de nettoyage (11) présente une tuyère à eau (12) rotative.
